# EUROPÄISCHE PATENTANMELDUNG

(11) **EP 1 559 901 A2**
(43) Veröffentlichungstag der Anmeldung: **03.08.2005**
(21) Anmeldenummer: 04028952.2
(22) Anmeldetag: 07.12.2004
(51) Int. Cl.: F02M 31/13

(54) **Heizflansch zum Vorwärmen der Ansaugluft für eine Brennkraftmaschine**

(30) Priorität: 29.01.2004 DE 102004004551
(71) Anmelder: Beru AG, 71636 Ludwigsburg (DE)
(72) Erfinder: Geiger, Steffen, 71679 Asperg (DE); Giffels, Thomas, 70469 stuttgart (DE); Eller, Martin, 71642 Ludwigsburg (DE); Stephan, Ullrich, 74391 Erligheim (DE); Houben, Hans, 52146 Würselen (DE)
(74) Vertreter: Pohlmann, Eckart, Dipl.-Phys.

(57) **Zusammenfassung**

Heizflansch zum Vorwärmen der Ansaugluft für eine Brennkraftmaschine mit einem Gehäuse zum Anbringen des Heizflansches an einer Luftansaugleitung der Brennkraftmaschine. Wenigstens ein in Windungen (1a) verlaufendes Heizband (1) ist im Gehäuse gehalten und mit elektrischen Anschlüssen (6) versehen, die vom Gehäuse nach außen führen. Das Heizband (1) ist im Gehäuse durch eine zwischen zwei Gehäusewänden verlaufende Abstützung (3) gehalten, die elektrisch isoliert durch die Windungen (1a) des Heizbandes (1) führt.

## Beschreibung

Die Erfindung betrifft einen Heizflansch zum Vorwärmen der Ansaugluft für eine Brennkraftmaschine mit einem Gehäuse zum Anbringen des Heizflansches an einer Luftansaugleitung der Brennkraftmaschine und wenigstens einem in Windungen verlaufendem Heizband, das im Gehäuse gehalten und mit elektrischen Anschlüssen versehen ist, die vom Gehäuse nach außen führen.

Ein derartiger Heizflansch ist beispielsweise aus der US 6,119,665 oder der DE 195 15 533 C2 bekannt.

Bei den bekannten Heizflanschen ist es als nachteilig anzusehen, dass zwischen dem Heizband und der dafür vorgesehenen Abstützkeramik durch Schwingungen ein Verschleiß auftreten kann.

Die der Erfindung zugrunde liegende Aufgabe besteht daher darin, einen Heizflansch der eingangs genannten Art zu schaffen, der weniger verschleißanfällig ist.

Diese Aufgabe wird gemäß der Erfindung durch eine zwischen zwei Gehäusewänden und durch die Windungen des Heizbandes verlaufende Abstützung gelöst, die gegenüber dem Heizband isoliert ist.

Bei dem erfindungsgemäßen Heizflansch fehlt die Abstützkeramik, die bei bekannten Heizflanschen vorgesehen ist und dazu dient, das Heizband zu halten und zu stützen, so dass der hier auf Grund von Schwingungen auftretende Verschleiß vermieden wird.

Der erfindungsgemäße Heizflansch hat darüber hinaus den Vorteil, dass auf Grund des Fehlens der Abstützkeramik und der zum Halten der Abstützkeramik am Gehäuse vorgesehenen Einrichtungen die Anzahl der Bauteile des Heizflansches herabgesetzt ist.

Besonders bevorzugte Ausgestaltungen und Weiterbildungen des erfindungsgemäßen Heizflansches sind Gegenstand der Ansprüche 2 bis 8.

Im Folgenden werden anhand der zugehörigen Zeichnung besonders bevorzugte Ausführungsbeispiele des erfindungsgemäßen Heizflansches näher beschrieben. Es zeigen
Fig. 1 in einer perspektivischen Ansicht ein Ausführungsbeispiel eines Heizflansches gemäß der Erfindung mit einem Heizband mit Abstützung und elektrischen Anschlüssen im eingebauten Zustand,
Fig. 2 in einer Teilschnittansicht ein zweites Ausführungsbeispiel des erfindungsgemäßen Heizflansches,
Fig. 3 in einer Teilschnittansicht ein drittes Ausführungsbeispiel des erfindungsgemäßen Heizflansches mit zwei Heizbändern und
Fig. 4A und Fig. 4B in Schnittansichten zwei bevorzugte Ausführungsbeispiele der Abstandsstücke zwischen den Windungen des Heizbandes.

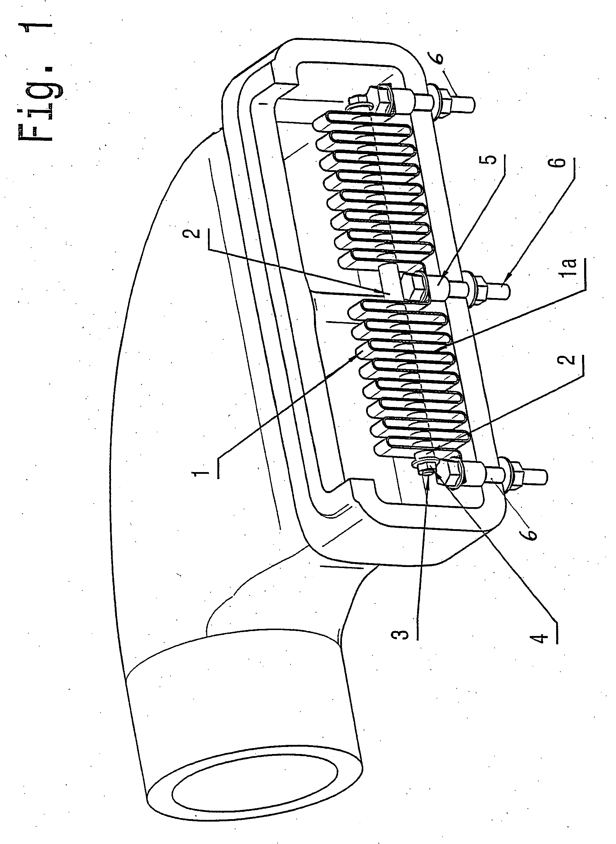

Fig. 1 zeigt einen in die Luftansaugleitung einer Brennkraftmaschine eingebaute Heizflansch mit einem einteiligen Heizband 1 gemäß eines Ausführungsbeispiels der Erfindung. Das Heizband 1 ist in einem Gehäuse angeordnet, das an der Luftansaugleitung der Brennkraftmaschine angebracht ist.

Das Heizband 1 ist in Windungen 1a oder meanderförmig verlaufend vorgesehen und mit elektrischen Anschlüssen 6 versehen, die über Isolierungen 5 durch das Gehäuse und vom Gehäuse nach außen führen.

Die mechanische Befestigung des Heizbandes 1 am Gehäuse erfolgt über die äußeren elektrischen Anschlüsse 6. Der mittlere Anschluss 6 kann auch zur mechanischen Befestigung des Heizbandes 1 oder als elektrischer Mittenabgriff vorgesehen sein.

Zum Abstützen des Heizbandes 1 ist eine Abstützung 3 in Form beispielsweise eines Abstützstabes vorgesehen, der über eine Abstützbefestigung 4 an den Anschlüssen 6 angebracht ist.

Wie es in Fig. 1 dargestellt ist, führt die Abstützung durch die einzelnen Windungen 1a des Heizbandes 1, das heißt durch in den einzelnen Windungen 1a vorgesehene Bohrungen hindurch. Zwischen den einzelnen Windungen 1a sind auf der Abstützung 3 Abstandsstücke 2 in Form von Ringen, Tabletten oder Perlen vorgesehen, die aus einem isolierenden Material bestehen.

Die Abstützung 3 kann aus einem isolierenden Material bestehen oder mit einer isolierenden Beschichtung versehen sein. Zur Isolierung zwischen dem Heizband 1 und der Abstützung 3 kann aber auch ein nicht dargestelltes zusätzliches Isolierrohr vorgesehen sein, wobei in diesem Fall die Abstützung 3 aus einem nicht isolierenden Material bestehen kann.

Bei dem in Fig. 1 dargestellten Ausführungsbeispiel bestehen die Abstandsstücke aus Ringen, die flächig auf den Windungen 1a des Heizbandes 1 um die darin vorgesehenen Bohrungen zur Durchführung der Abstützung 3 aufliegen.

Die Abstandsstücke 2 können mit axialen Verlängerungen, Ringen oder Nasen versehen sein, die in Aussparungen insbesondere Bohrungen in den Windungen 1a des Heizbandes 1 eingreifen und somit die Abstützung 3 gegenüber dem Heizband 1 isolieren. Auch in diesem Fall kann die Abstützung 3 aus einem nicht isolierenden Material bestehen.

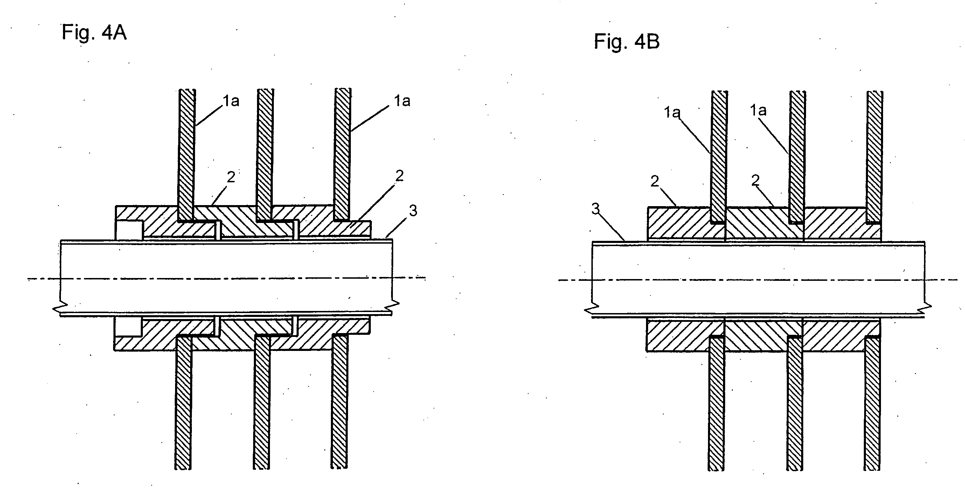

Das in Fig. 4A dargestellte Ausführungsbeispiel zeigt Abstandsstücke 2, die hülsenförmig mit axialen ringförmigen Verlängerungen auf beiden Seiten ausgebildet sind. Die axialen ringförmigen Verlängerungen greifen in Aussparungen in den Windungen 1a des Heizbandes 1 sowie in die axiale ringförmige Verlängerung des benachbarten Abstandsstücks 2 ein. Fig. 4B zeigt ein Ausführungsbeispiel der Abstandsstücke 2, das gleichfalls hülsenförmig mit einer einseitigen axialen ringförmigen Verlängerung ausgebildet ist, die in eine Aussparung in der Windung 1a des Heizbandes 1 eingreift. Stirnseitig liegt diese axiale ringförmige Verlängerung an der Rückseite des benachbarten Abstandsstücks 2 an.

Die einzelnen Windungen 1a des Heizbandes 1 können durch die Abstützung 3 und die Abstützbefestigung 4 verschraubt, vernietet, verklemmt oder in anderer Weise gehalten sein.

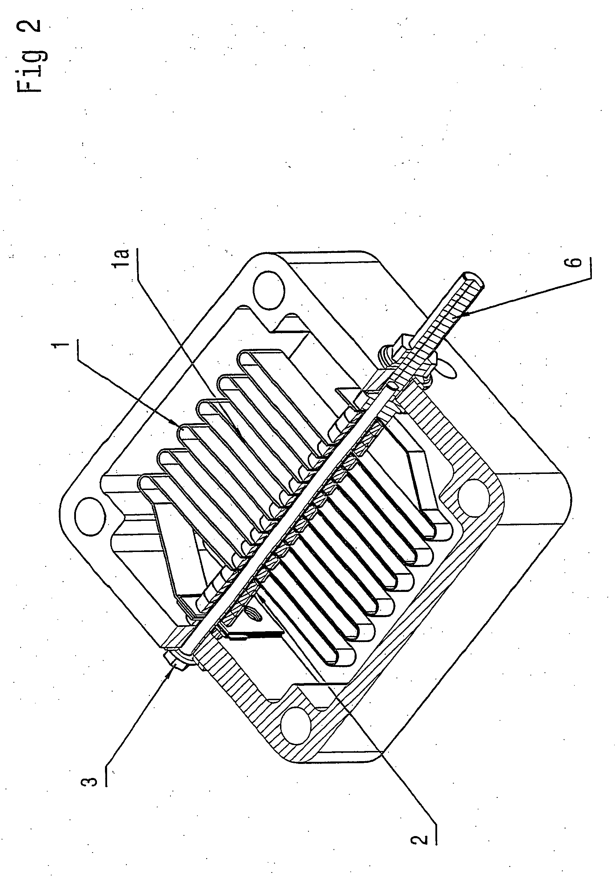

Fig. 2 zeigt ein zweites Ausführungsbeispiel des erfindungsgemäßen Heizflansches, bei dem im Gegensatz zu dem in Fig. 1 dargestellten Ausführungsbeispiel das Heizband einteilig ausgebildet ist und die Abstützung 3 durch die Windungen des Heizbandes 1 etwa in der Windungsmitte hindurch führt.

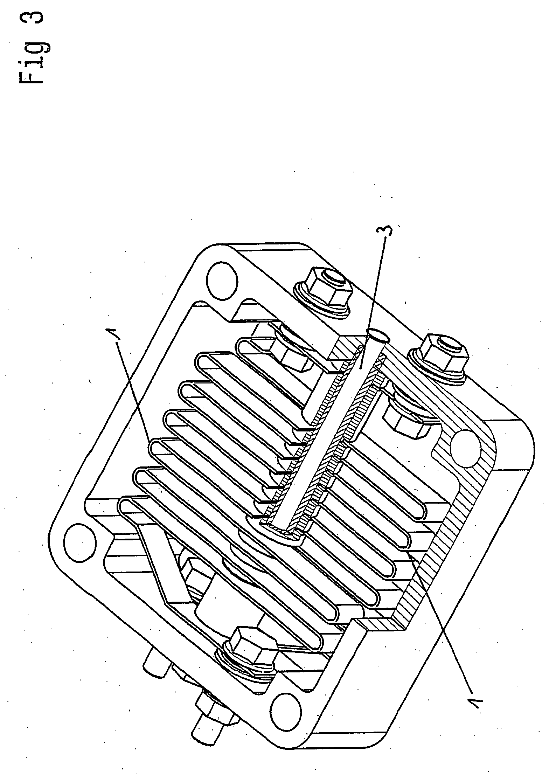

Das in Fig. 3 dargestellte Ausführungsbeispiel umfasst zwei in parallelen Ebenen nebeneinander liegende Heizbänder 1, wobei die Abstützung 3 durch die Windungen beider Heizbänder 1 hindurch führt, indem diese so ausgeklinkt sind, dass für die Montage nur eine mittige Abstützung 3 benötigt wird.

## Patentansprüche

1. Heizflansch zum Vorwärmen der Ansaugluft für eine Brennkraftmaschine mit einem Gehäuse zum Anbringen des Heizflansches an einer Luftansaugleitung der Brennkraftmaschine und wenigstens einem in Windungen verlaufenden Heizband, das im Gehäuse gehalten ist und mit elektrischen Anschlüssen versehen ist, die vom Gehäuse nach außen führen, **gekennzeichnet durch** eine zwischen zwei Gehäusewänden und **durch** die Windungen (1a) des Heizbandes (1) verlaufende Abstützung (3), die gegenüber dem Heizband (1) isoliert ist.

2. Heizflansch nach Anspruch 1, **dadurch gekennzeichnet, dass** auf der Abstützung (3) und zwischen den einzelnen Windun-, gen (1a) des Heizbandes (1) Abstandsstücke (2) aus einem elektrisch isolierenden Material vorgesehen sind.

3. Heizflansch nach Anspruch 2, **dadurch gekennzeichnet, dass** die Abstandsstücke (2) hülsenförmig ausgebildet sind.

4. Heizflansch nach einem der vorhergehenden Ansprüche, **dadurch gekennzeichnet, dass** die Abstützung (3) aus einem isolierenden Material ausgebildet ist.

5. Heizflansch nach einem der Ansprüche 1 bis 3, **dadurch gekennzeichnet, dass** die Abstützung (3) mit einer isolierenden Beschichtung versehen ist.

6. Heizflansch nach einem der Ansprüche 1 bis 3, **dadurch gekennzeichnet, dass** auf der Abstützung (3) ein Isolierrohr vorgesehen ist.

7. Heizflansch nach Anspruch 3, **dadurch gekennzeichnet, dass** die hülsenförmigen Abstandsstücke (2) mit einer axialen Verlängerung oder Nase versehen sind, die in Aussparungen in den Windungen (1a) des Heizbandes (1) eingreifen.

8. Heizflansch nach Anspruch 1 mit zwei Heizbändern, die in parallelen Ebenen nebeneinander angeordnet sind, **dadurch gekennzeichnet, dass** eine einzige Abstützung (3) mittig durch beide Heizbänder (1) führt.
